## Europäisches Patentamt
(19) **European Patent Office**

**Office européen des brevets**

(11) Publication number : **0 380 532 B1**

## (12) EUROPEAN PATENT SPECIFICATION

(45) Date of publication of patent specification :
02.01.92 Bulletin 92/01

(51) Int. Cl.⁵ : **G11B 5/64, H01F 41/22, C23C 18/12**

(21) Application number : **88908223.6**

(22) Date of filing : **26.09.88**

(86) International application number :
**PCT/EP88/00877**

(87) International publication number :
**WO 89/03111 06.04.89 Gazette 89/08**

(54) **PREPARATION OF THIN LAYERS OF IRON III OXIDE FOR OPTICAL AND/OR MAGNETIC RECORDING.**

(30) Priority : **29.09.87 FR 8713700**

(43) Date of publication of application :
**08.08.90 Bulletin 90/32**

(45) Publication of the grant of the patent :
**02.01.92 Bulletin 92/01**

(84) Designated Contracting States :
**BE CH DE FR GB IT LI NL**

(56) References cited :
**EP-A- 0 125 507**
**EP-A- 0 125 638**
**EP-A- 0 198 748**
**Patent Abstracts of Japan, vol. 10, no. 328 (C-383) (2384), 7 November 1986 & JP, A, 61136683**
**Chemical Abstracts, vol. 103, no. 6, 12 August 1985, (Columbus, Ohio, US), see page 673, abstract 47082p, & JP, A, 6054925**

(73) Proprietor : **KODAK-PATHE**
**26, rue Villiot**
**F-75594 Paris Cedex 12 (FR)**

(84) Designated Contracting States :
**FR**
Proprietor : **EASTMAN KODAK COMPANY (a New Jersey corporation)**
**343 State Street**
**Rochester New York 14650 (US)**

(84) Designated Contracting States :
**BE CH DE GB IT LI NL**

(72) Inventor : **COT, Louis; Ecole Nationale Supérieure de Chimie**
**de Montpellie r; 8, rue de l'Ecole Normale;**
**F-34075 Montpellier Cédex (FR)**
Inventor : **GUIZARD, Christian; Ecole Nationale Supérieure**
**de Chimie de Montpellier;rue de l'Ecole Normale F-34075 Montpellier Cédex (FR)**
Inventor : **LARBOT, André; Ecole Nationale Supérieure de**
**Chimie de Montpellie r; 8, rue de l'Ecole Normale;**
**F-34075 Montpellier (FR)**
Inventor : **LURIN, Christian Kodak-Pathé CRT - Zone Industrielle**
**F-71102 Chalon-sur-Saône Cédex (FR)**
Inventor : **ROUVIERE, Jacques; Université des Sciences et**
**Techniques du Languedoc ; Place E. Bataillon;**
**F-34000 Montpellier (FR)**

(74) Representative : **Buff, Michel et al**
**Kodak-Pathé Département des Brevets et Licences CRT Centre de Recherches et de Technologie Zone Industrielle**
**F-71102 Chalon sur Saône Cédex (FR)**

## Description

The present invention relates to a method for preparing thin layers of iron[III] oxide, by coating viscous solutions formed from metal alkoxides on a support, and their application to magnetic or magneto-optical recording.

It is known to polymerize metal alkoxides, by hydrolysis and removing of alcohol. These reactions are used for forming fine and homogeneous powders, or thin layers, by high temperature pyrolysis of the resulting polymers.

Thus, HITACHI (JP 58 045 118, 58 045 119, 58 045 120, 58 045 121) uses fine powders prepared from iron alkoxide and Ba or Sr, or from Ba or Sr alkoxide and iron acetyl acetonate, to prepare permanent magnets by pressing.

Sentakako (JP 60 054 925) prepares powders of ultrafine particles of Pb, Ba or Sr hexafenites, from a mixture of iron alkoxide and another metal alkoxide or from a double alkoxide of iron and the other metal. Alkoxides dissolved in benzene are hydrolysed by refluxing under stirring in the presence of water. The precipitate formed is collected and heated to 800°C.

UK 2 009 723 and US 3 647 531 disclose methods for producing Cd, Ti or Sb stannate layers by dipping a support in an alcoholic solution of metal alkoxides. The layer is hydrolysed after coating by drying in a humid atmosphere and then heated to 500-650°C. These products are used as electroconductive materials, or to manufacture windows or doors of microwave ovens, or solar pannels, etc...

EP 125 507 (KANEGAFUCHI) discloses the preparation of electronic or magnetic materials comprising layers of various mixed metal oxides, from solutions which are mixtures of an alkoxide of a metal and a chelate of another metal. These solutions must be stable before being coated ; optionally, a solubilizing agent and/or a stabilizer and a thickener are added to control the viscosity of the coating composition. They can be optionally hydrolysed with a small amount of water. The layers are then heated to a temperature ranging from 600 to 1000°C.

EP 125 638 (KANEGAFUCHI) discloses the obtention of thin ferrite layers, by coating oligomer or not, hydrolysed or not, alkoxide solutions containing an organic polymer, and then by treating the layers to a temperature ranging from 600 to 1000°C.

JP 61 136 683 (FUJI) discloses the obtention of an hexagonal fenite layer for magneto-optical recording from solutions of organic metal compounds, such as carboxylates or alkoxides, optionally treated with organic acids. The compounds are dissolved and the solution is stabilized before being coated. The resulting layers are heat-treated at 600 - 800°C.

In all these methods, either the alkoxides are converted into gels, then powders are obtained by pyrolysis, or alkoxide solutions that must be stabilized are prepared to form layers which then undergo a heat treatment. It is difficult to form stable solutions. This is particularly true for alkoxides, such as iron alkoxides which are very quickly hydrolysed, such hydrolysis leading to a rapid bulk, and therefore, a solid gel is formed which can no longer be coated.

It is the reason why, in the prior art, it is proposed to stabilize the alkoxide solution by various means, without controlling the hydrolysis.

Besides, alkoxide hydrolysis is a critical process and it would be highly desirable to control it for various reasons, on the one hand, to form stable solutions having a given viscosity allowing to form layers having the desired thickness. On the other hand, it is known that metal polymer gels are precursors of the desired final oxide, i.e., the polymer structure is found at least partly in the structure of the resulting oxide. The hydrolysis conditions have significant effects on the polymer structure, and therefore, on the properties of the final oxide. Another significant parameter which has an effect on the final oxide structure is the homogeneity of the polymer structure.

Up to now, the hydrolysis method recommended in the literature consists in adding dropwise a water/alcohol mixture to an alkoxide solution diluted in alcohol. However, this method cannot provide highly homogeneous gels, since, during the water addition, the water concentration in the solution is not homogeneous at all ; it is excessively high in the added drop, and very low elsewhere. If this direct hydrolysis method is suitable for silicon alkoxides, for example, it is unsuitable for iron alkoxides which are highly unstable and are very quickly hydrolysed, even just by moisture in the air.

Thus, it is highly desirable to find a method for hydrolysing alkoxides of iron and/or other metals allowing to form viscous solutions of polymers having a preformed homogeneous structure and a viscosity suitable for coating these polymers on a support and allowing to form layers having the expected thickness.

The purpose of the present invention is to provide a method for preparing layers of iron[III] oxide on a support consisting in :

1) using an iron alkoxide solution in a hydrophobic solvent in which the alkoxide is soluble, as starting material ;

EP 0 380 532 B1

2) preparing on the other hand an emulsion of water in oil containing the same hydrophobic solvent as in (1), water and a surfactant ;

3) mixing the solution and the emulsion ;

4) coating a layer of the mixture obtained in (3) on a support and,

5) heat treating this layer.

According to this method, a mixture containing iron alkoxide and one or more other alkoxides, or a mixed alkoxide of iron and another metal can be used as starting material, as far as the whole mixture remains soluble in the selected organic solvent.

In step (2), the emulsion contains reverse water/hydrophobic solvent micelles. This emulsion is stable, perfectly homogeneous and transparent. The amount of free water exchanged by the micelles depends on the water/surfactant molar ratio n. When this emulsion is homogeneously mixed with an alkoxide solution, the alkoxide consumes the water, thus displacing the equilibrium and leading to a gradual release of water from the micelles. The hydrolysis rate can be controlled by means of n ratio and of water/alkoxide molar ratio h. The hydrolysis also depends on the nature of the surfactant.

In addition to the advantages previously mentioned for obtaining a polymeric gel having a preformed homogeneous structure and a controlled viscosity, the method according to the invention involves an hydrophobic solvent in which alkoxides are generally much more soluble than in alcohol, which allows to prepare highly concentrated solutions and then, thicker layers. Moreover, an hydrophobic solvent shows very little tendency to pump atmospheric humidity and thus, to interfere with hydrolysis ; furthermore, some of these solvents having a high boiling point, by generating a reducing gas-atmosphere during the heat treatment, contribute to the formation of metal ions having a lower valence.

The hydrophobic solvent used can be an alkane, preferably having from 7 to 15 carbon atoms, an aromatic hydrocarbon such as benzene or toluene, a chlorinated solvent such as methylene chloride, or carbon tetrachloride. The choice of the solvent can be determined by the man skilled in the art according to the solubility of the determined alkoxide and the expected final use. A higher alkoxide concentration allows to obtain less thin and more advantageous layers. The final concentration c of the alkoxide is in the range of 0.4 to 3 mole/l.

A non ionic surfactant gives good results in carrying out the method according to the invention. For example, an octylphenol or an ethoxylated nonylphenol, or an ethoxylated branched chain alcohol can be used. Ionic surfactants containing mineral elements such as S, P, Na, K, F, Cl can also be used.

Water containing an organic or mineral acid or base in solution, or mineral salts can be used. These procedures allow to act on the conditions of the polymer formation and therefore, on its structure.

The water concentration is determined by the water to alkoxide molar ratio h which is in the range of 0.01 to 10, and the surfactant concentration is determined by the water to surfactant molar ratio n, which conditions the hydrolysis rate, as mentioned above, and which is in the range of 0,4 to 3.

The gelation time can vary from a few seconds to several days, according to c, h and n.

Lower straight or branched chain alkoxides having from 1 to 8 carbon atoms, for example, ethoxide, propoxides, butoxides on mixtures thereof, can be used as alkoxides of iron[III] and of other metals.

The other metals are selected according to the desired compound. In fact, it is known that is necessary to dope the iron oxide to give to the final oxide layer specific properties according to the magnetic or magneto-optical applications contemplated. Dopants can be selected from transition metals such as chromium, manganese, iron[II], cobalt, nickel, copper, zinc, lead, barium, strontium, titanium, yttrium, gallium, bismuth, aluminium and rare earth metals.

In an embodiment, the iron alkoxide and the alkoxide of the other metal are mixed in an organic solution.

In another embodiment, a double alkoxide of iron and the other metal is used.

The solubility of the alkoxides in their solvent is significant factor which can be determined by the men skilled in the art. In particular double alkoxides are more soluble than simple alkoxides of some metals such as cobalt, and they seem very attractive.

The synthesis of metal alkoxides has been known for a long time. Thus, the ammonia synthesis of iron ethoxide was disclosed in 1958 by D.C. BRADLEY and al, S. Chem. Soc., 1958, 126, and the synthesis by sodium ethoxide by P.A. THIESSEN and al, Z. Anorg. Allgem. Chem., 1929, p 180, n° 1, pp 65 - 74.

Metal alkoxides can exchange their alkyl groups, and this property can be used for this synthesis. The reaction can be represented by the following equation :

$$M(OR)_n + nR'OH \rightarrow M(OR')_n + nROH$$

where R is an alkyl residue and M a metal. If the alcohol R'OH has a boiling point higher than the alcohol ROH, the equilibrium can easily be displaced by removing ROH by fractional distillation. Thus, iron isopropoxide can be prepared from iron ethoxide and isopropyl alcohol.

Double alkoxides of iron can be prepared by a method disclosed by Mehrotra and al (Synth. React. Inorg. Mer - Inorg. Chem., 9(1), 79 - 88, 1979), for the double alkoxides of aluminum. First, a double alkoxide of iron

3

and an alkali metal is prepared, and then, by an exchange reaction, the alkali metal is replaced by another metal such as cobalt or barium. The reaction can be represented by the following equation :

$$MCl_2 + 2kFe(OR)_4 \rightarrow ; M[Fe(OR_4)]_2 + 2kCl$$

where M is a metal and R is an alkyl residue.

A significant and critical problem of these syntheses is to obtain products free of impurities, of humidity and acidity. As these compounds are very quickly hydrolysed, it is necessary to work under an inert atmosphere, such as nitrogen or argon, in a glassware previously dried.

Examples of synthesis are mentioned below.

After hydrolysis has been carried out according to the method of the invention at a step where the product is not yet entirely gelled, the resulting polymer solution can be coated on a support. Any heat-proof support can be used. However, as the temperature of this treatment is lowered in the method of the invention, supports which are resistant at a temperature as low as 500°C, for example ordinary glass, can be used. These supports must not interfere with the desired properties of the final oxide layer. The polymer solution can be coated on the support by any known method, for example by spin coating or by dipping.

The resulting coatings are dried, then baked again to remove the organic residues and to recrystallize the desired oxide. It has been found that these oxides are formed at lower temperatures than those required in the prior art. This will be illustrated in example 15.

Any kinds of thin layers based on iron oxides can be prepared by the method according to the invention. A particularly interesting application of these thin layers is magnetic or magnetooptical recording. Among the compounds which can be used in this application and which can be prepared according to the method of the invention, we can mention $\gamma Fe_2O_3$, $Fe_3O_4$, $[Co_{1-x}Fe_x]Fe_2O_4$, $BaFe_{12}O_{19}$, $(Co_{1-x}Fe_x)(Fe_{1-y}Al_y)_2O_4$, garnets such as $Y_3Fe_5O_{12}$.

The following examples illustrate the invention :

Example 1 - Synthesis of iron$^{III}$ ethoxide $Fe(OC_2H_5)_3$ by the ammonia method.

The synthesis reaction can be represented by the following equation :

$$FeCl_3 + EtOH + 3 NH_3 \rightarrow Fe(OEt)_3 + 3NH_4Cl$$

In a 3 liter, 4 neck round bottom flask equipped with a magnetic stirrer, were fed 100 g of anhydrous iron$^{III}$ chloride and 1 liter of reagent grade benzene (water content less than 0.03 % w/w). The flask was previously dried under vacuum at 120-140°C, swept twice with argon and cooled down under argon. Sodium dried ethyl alcohol (500 ml) was directly distilled into the flask. At this step, most of the iron chloride was dissolved. Ammonia was then bubbled through the solution at a rate of 1.2 mole/hour during 3 hours. The reaction was slightly exothermic. The solution temperature raised up to about 45°C. A vigorous stirring was needed to ensure a good homogeneity of the mixture. The resulting precipitate was allowed to settle overnight and removed by filtration. The viscous dark brown residue obtained by evaporation under reduced pressure of the solvent was dissolved in ethanol (1 liter) from which dark brown crystals deposited. These crystals could be washed with dry ethanol, dissolved again by heating at 60° C and recrystallized. The solubility of these crystals was found to be close to 30 mg/ml at room temperature (0.15 mole/l) in ethanol, 1.4 mole/l in carbon tetrachloride and 0.7 mole/l in decane.

Example 2 - Synthesis of iron$^{III}$ ethoxide $Fe(OC_2H_5)_3$ by the sodium ethoxide method.

The synthesis reaction can be represented by the following equation :

$$FeCl_3 + 3 EtOH + 3 NaOEt \rightarrow Fe(OEt)_3 + 3 naCl$$

A solution of sodium ethoxide was prepared by dissolution of metal sodium in distilled ethanol. Iron chloride $FeCl_3$ (25 g, 0.15 mole) was added to benzene (200 ml) in a vessel. Ethanol (50 ml) was distilled in the vessel. The mixture was homogeneized with a mechanical stirrer. A sodium ethoxide solution (200 cm$^3$, containing 2.25 mole/l) was added dropwise to the first solution. After decanting overnight, the surnatant was filtered, the solvents removed by evaporation under vacuum and the residue crystallized from fresh ethanol. $Fe(OEt)_3$ crystals appeared after a few hours. They were washed and recrystallized from ethanol. As previously, all the operations were carried out in an inert atmosphere (argon or nitrogen).

Example 3 - Preparation of iron$^{III}$ isopropoxide

Crystals of iron ethoxide $Fe(OEt)_3$ were dissolved in a benzene solution. An excess of isopropyl alcohol was added to this solution. After refluxing one hour, ethyl alcohol was removed in the form of benzene/ethanol azeotrope. The fractional distillation was stopped until ethyl alcohol was no longer detected in the distillation product. All these operations were repeated 3 times. Isopropyl alcohol was then removed in the form of benzene/isopropanol azeotrope. The viscous red-brown liquid obtained by evaporation of the benzene could be dissolved again in another solvent, according to the method of the invention.

Gas chromatography shows that a mixed alkoxide $Fe(O^iPr)_{3-x}(OEt)_x$ was obtained. The solubility of this compound in decane seemed to increase as x decreased.

Exemple 4 - Preparation of double alkoxides of iron$^{III}$.

The synthesis of Mehrotra above mentioned was used.

Two solutions of k(OEt) and Fe(OR)$_3$ in benzene were mixed in stoichiometric ratio. The resulting mixture was used to prepare double alkoxides of Fe$^{III}$/cobalt, of Fe$^{III}$/barium, of Fe$^{III}$/Fe$^{II}$.

To the benzenic solution prepared above was added metal chloride in stoichiometric ratio. Cobalt, barium and iron$^{II}$ chlorides are insoluble in benzene. The solutions were refluxed a few hours. A white precipitate of KCl slowly appeared which was filtered off. The surnatant solution contained the desired double alkoxide which is soluble, in opposition to the simple alkoxides of cobalt, barium and iron$^{II}$.

Examples 5 to 14 - Hydrolysis of iron$^{III}$ isopropoxide.

An emulsion containing decane, water and the surfactant Triton X 35 (Sigma product) which is an ethoxylated octylphenol (molecular weight : 338 g) was prepared. The water and surfactant contents were calculated in order to meet the n value (water to surfactant molar ratio) and h value (water to alkoxide molar ratio) mentioned in the following table.

A solution of iron isopropoxide in decane at a concentration in the range of 0.5 to 4 mole/liter was prepared.

Volumes of the two preparations predetermined so that c (molar concentration of iron isopropoxide in the final mixture) could meet the values mentioned in the following table, were mixed under a slight stirring in a dry atmosphere.

The gelation time was determined. Gelation was assumed to occur when no more flow of the product was observed when the tube containing it, was put to the horizontal.

The following table indicates the gelation time according to c, h and n.

## TABLE

| Example | c(mole/l) | h | n | gelation time |
|---------|-----------|-----|-----|---------------|
| 5 | 2.6 | 1.5 | 1.2 | * |
| 6 | 2.6 | 1.3 | 1.0 | * |
| 7 | 3.0 | 0.9 | 1.0 | a few seconds |
| 8 | 2.6 | 1.0 | 0.8 | a few seconds** |
| 9 | 2.6 | 0.9 | 0.8 | 5 minutes |
| 10 | 3.0 | 0.8 | 0.8 | a few hours** |
| 11 | 3.0 | 0.7 | 0.8 | *** |
| 12 | 1.7 | 1.1 | 0.6 | a few hours** |
| 13 | 2.1 | 0.9 | 0.6 | a few hours** |
| 14 | 0.58 | 0.7 | 0.6 | a few hours** |

\* These samples precipitated as soon as the solution and the emulsion were mixed.

\*\* "a few seconds" means a quite instantaneous gelation. "a few hours" means from 1 to 12 hours.

\*\*\* This sample was not yet gelled after a month.

This table shows that by selecting c, h and n values allowing to obtain gelation times of a few hours, there is time enough to coat the product on a support before it is entirely gelled, its viscosity being selected according to the expected results.

Example 15

The solution disclosed in example 14 was used 6 hours after hydrolysis began to prepare thin layers of iron oxide Fe$_3$O$_4$. It was spin-coated on glass substrates (disks having about 6 cm in diameter and 2 mm in thickness). The substrates used were thoroughly cleaned in an ultrasonic bath. The rotation speed of the spin coater was 1500 rpm and the rotation time was 20 seconds.

The layers thus prepared were heated under an inert atmosphere (argon or nitrogen). Heat treatment procedure was the following :

– heating to 120°C at a rate of 30°C/hour,

– rest : 2 hours at 120°C,

– heating to 470°C at a rate of 50°C/hour,
– rest : 3 hours at 470°C,
– natural cooling to room temperature.

The thin resulting layers were formed of $Fe_3O_4$, having a 250.0 nm thickness. They were polycrystalline, the average size of a crystallite being in the range of 0.5 nm - 10.0 nm. The magnetic properties of the $Fe_3O_4$ layers measured by VSM were Hc = 300 Oe - Ms = 140 Gauss (VSM = vibrating sample magnetometer).

**Claims**

1. A method for preparing layers of iron$^{III}$ oxide on a support, comprising the following steps :
1) a solution of alkoxide of iron$^{III}$ in a hydrophobic solvent in which the alkoxide is soluble is used as starting material ;
2) on the other hand, an emulsion of water in oil containing the same hydrophobic solvent as in (1), water and a surfactant is prepared ;
3) the solution and the emulsion are mixed ;
4) a layer of the mixture obtained in (3) is coated on a support, and
5) this layer is heat treated ; the water/surfactant molar ratio n being in the range of 0.4 to 3, the water/alkoxide molar ratio h being in the range of 0.01 to 10 and the final concentration c of the alkoxide in the mixture (3) is in the range of 0.4 to 3 mole/l.

2. A method according to claim 1, in which the hydrophobic solvent is an alkane, an aromatic hydrocarbon or a chlorinated solvent;

3. A method according to claim 2, in which the hydrophobic solvent is decane.

4. A method according to claim 1, in which the surfactant is non ionic.

5. A method according to claim 4, in which the surfactant is an alcohol or an ethoxylated phenol.

6. A method according to claim 1, in which the surfactant is ionic.

7. A method according to claim 6, in which the surfactant contains at least an element selected among S, P, Na, F, Cl, K atoms.

8. A method according to claim 1, in which the micelles of the water in oil emulsion contain an acid, a base or mineral salts in water solution.

9. A method according to any of claims 1 to 8, characterized in that the alkoxide has from 1 to 8 carbon atoms.

10. A method according to claim 9, in which the alkoxide is selected from ethoxide, a propoxide, a butoxide and mixtures thereof.

11. A method according to any of claims 1 to 9, in which a mixture of iron alkoxide with at least an alkoxide of another metal which is soluble in the hydrophobic solvent is used as starting material.

12. A method according to any of claims 1 to 9, in which a double alkoxide of iron and another metal is used as starting material.

13. A method according to any of claims 11 or 12, in which the other metal is selected from chromium, manganese, iron$^{II}$, cobalt, nickel, copper, zinc, lead, barium, strontium, titanium, yttrium, gallium, bismuth, aluminum and rare earth metals.

**Patentansprüche**

1. Verfahren zur Herstellung von Eisen$^{III}$-oxid-Schichten auf einem Träger mit den folgenden Stufen:
1) als Ausgangsmaterial wird eine Lösung von Eisen$^{III}$alkoxid in einem hydrophoben Lösungsmittel, in dem das Alkoxid löslich ist, verwendet,
2) andererseits wird eine Emulsion von Wasser in Öl mit dem gleichen hydrophoben Lösungsmittel wie in (1), Wasser und einem oberflächenaktiven Mittel hergestellt;
3) die Lösung und die Emulsion werden miteinander vermischt;
4) auf einen Träger wird eine Schicht aus der Mischung gemäß (3) aufgetragen und
5) diese Schicht wird einer Wärmebehandlung unterworfen; das molare Verhältnis n von Wasser/oberflächenaktivem Mittel liegt im bereich von 0,4 bis 3, das molare Verhältnis h von Wasser/Alkoxid liegt im bereich von 0,01 bis 10 und die endgültige konzentration c des Alkoxides in der Mischung (3) liegt im bereich von 0,4 bis 3 Molen/l.

2. Verfahren nach Anspruch 1, in dem das hydrophobe Lösungsmittel ein Alkan, ein aromatischer Kohlenwasserstoff oder ein chloriertes Lösungsmittel ist.

3. Verfahren nach Anspruch 2, in dem das hydrophobe Lösungsmittel Dekan ist.

4. Verfahren nach Anspruch 1, in dem das oberflächenaktive Mittel nicht-ionogen ist.

5. Verfahren nach Anspruch 4, in dem das oberflächenaktive Mittel ein Alkohol oder ein ethoxyliertes Phenol ist.

6. Verfahren nach Anspruch 1, in dem das oberflächenaktive Mittel ionogen ist.

7. Verfahren nach Anspruch 6, in dem das oberflächenaktive Mittel mindestens ein Element, ausgewählt aus S, P, Na, F, Cl, K Atomen enthält.

8. Verfahren nach Anspruch 1, in dem die Micellen der Wasser-in-Öl-Emulsion eine Säure, eine base oder Mineralsalze in wäßriger Lösung enthalten.

9. Verfahren nach einem der Ansprüche 1 bis 8, dadurch gekennzeichnet, daß das Alkoxid 1 bis 8 kohlenstoffatome aufweist.

10. Verfahren nach Anspruch 9, in dem das Alkoxid ausgewählt ist aus Ethoxid, einem Propoxid, einem Butoxid und Mischungen hiervon.

11. Verfahren nach einem der Ansprüche 1 bis 9, in dem eine Mischung aus Eisenalkoxid mit mindestens einem Alkoxid eines anderen Metalles, das in dem hydrophoben Lösungsmittel löslich ist, als Ausgangsmaterial verwendet wird.

12. Verfahren nach einem der Ansprüche 1 bis 9, in dem ein Doppel-Alkoxid von Eisen und einem anderen Metall als Ausgangsmaterial verwendet wird.

13. Verfahren nach einem der Ansprüche 11 oder 12, in dem das andere Metall ausgewählt ist aus Chrom, Mangan, Eisen[II], Cobalt, Nickel, Kupfer, Zink, blei, barium, Strontium, Titan, Yttrium, Gallium, Wismuth, Aluminium und seltenen Erdmetallen.


## Revendications

1. Procédé de préparation de couches à base d'oxyde de fer [III] sur un support, comprenant les étapes suivantes :
   1) on utilise comme produit de départ une solution d'alcoxyde de fer [III] dans un solvant hydrophobe dans lequel l'alcoxyde est soluble ;
   2) on prépare d'autre part une émulsion eau dans l'huile contenant le même solvant hydrophobe qu'en (1), de l'eau et un agent tensioactif ;
   3) on mélange la solution et l'émulsion ;
   4) on applique le mélange obtenu en (3) en couche sur le support, et
   5) on effectue un traitement thermique de cette couche ; le rapport molaire Eau/Agent tensioactif n étant compris entre 0,4 et 3,0, le rapport molaire Eau/Alcoxyde h étant compris entre 0,01 et 10 et la concentration finale de l'alcoxyde c dans le mélange (3) étant compris entre 0,4 et 3,0 mol/l.

2. Procédé selon la revendication 1, dans lequel le solvant hydrophobe est un alkane, un hydrocarbure aromatique ou un solvant chloré.

3. Procédé selon la revendication 2, dans lequel le solvant hydrophobe est le décane.

4. Procédé selon la revendication 1, dans lequel l'agent tensioactif est non ionique.

5. Procédé selon la revendication 4, dans lequel l'agent tensioactif est un alcool ou un phénol éthoxylé.

6. Procédé selon la revendication 1, dans lequel l'agent tensioactif est ionique.

7. Procédé selon la revendication 6, dans lequel l'agent tensioactif contient au moins un élément choisi parmi les atomes de S, P, Na, F, Cl, K.

8. Procédé selon la revendication 1, dans lequel les micelles de l'émulsion eau dans l'huile contiennent un acide, une base ou des sels minéraux en solution dans l'eau.

9. Procédé selon l'une quelconque des revendications 1 à 8, caractérisé en ce que les alcoxydes comprennent de 1 à 8 atomes de carbone.

10. Procédé selon la revendication 9, dans lequel l'alcoxyde est choisi parmi un éthoxyde, un propoxyde, un butoxyde, et des mélanges de ces composés.

11. Procédé selon l'une quelconque des revendications 1 à 9, dans lequel on utilise comme produit de départ un mélange d'alcoxyde de fer avec au moins un alcoxyde d'un autre métal soluble dans le solvant hydrophobe.

12. Procédé selon l'une quelconque des revendications 1 à 9, dans lequel on utilise comme produit de départ un alcoxyde double de fer et d'un autre métal.

13. Procédé selon l'une quelconque des revendications 11 ou 12, dans lequel l'autre métal est choisi parmi le chrome, le manganèse, le fer[II], le cobalt, le nickel, le cuivre, le zinc, le plomb, le baryum, le strontium, le titane, l'yttrium, le gallium, le bismuth, l'aluminium, et les métaux de terre rare.